# EUROPÄISCHE PATENTSCHRIFT

(11) **EP 1 362 002 B1**
(45) Veröffentlichungstag und Bekanntmachung des Hinweises auf die Patenterteilung: **10.10.2007**
(21) Anmeldenummer: 02712796.8
(22) Anmeldetag: 20.02.2002
(51) Int. Cl.: B66F 7/16, G01M 13/02

(54) **KRAFTFAHRZEUG-PRÜFSTAND MIT EINER KIPPVORRICHTUNG**
TEST STAND WITH TIPPING DEVICE FOR MOTOR VEHICLES
BANC D'ESSAI D'AUTOMOBILE DOTE D'UN DISPOSITIF D'INCLINAISON

(30) Priorität: 21.02.2001 DE 20103107 U
(43) Veröffentlichungstag der Anmeldung: 19.11.2003
(73) Patentinhaber: SIEMENS AKTIENGESELLSCHAFT, 80333 München (DE)
(72) Erfinder: BÖCK, Hans, 74235 Erlenbach (DE); KÜBEL, Thomas, 96450 Coburg (DE)
(86) Internationale Anmeldenummer: PCT/DE2002/000614
(87) Internationale Veröffentlichungsnummer: WO 2002/066362

(56) Entgegenhaltungen:
- EP-A- 0 245 666
- WO-A-00/60330
- GB-A- 2 084 541
- US-A- 1 525 447
- US-A- 3 655 081
- US-A- 5 040 637
- US-A- 5 597 359

## Beschreibung

Die Erfindung betrifft einen Kraftfahrzeug-Prüfstand, welcher eine Kippvorrichtung aufweist. Diese wird im Rahmen eines ESP-Prüfungsvorganges zu einem Kippen des jeweils zu prüfenden Kraftfahrzeugs um dessen Längs- und Querachse verwendet.

Die US 1,525,447 A, die dem Oberbegriff des Anspruchs 1 entspricht, offenbart einen Kraftfahrzeug-Prüfstand mit einer Kippvorrichtung, welche eine untere Rahmeneinheit und eine relativ zu dieser kippbare obere Rahmeneinheit aufweist.

Aus der WO 00/60330 ist es bereits bekannt, zu einem Verkippen eines Fahrzeugs das Fahrzeug zunächst in die jeweilige Prüfposition anzuheben. Dann werden Verschlussmittel, die zwischen einem oberen und einem unteren Rahmenteil eines Traggestells vorgesehen sind, selektiv derart freigegeben bzw. verriegelt, dass das obere Rahmenteil, auf welchem das zu prüfende Fahrzeug aufliegt, unter Verwendung einer zwischen den Rahmenteilen angeordneten Hubeinheit relativ zum unteren Rahmenteil in Längs- oder Querrichtung verkippt werden kann.

Nachteilig bei einer derartigen Vorgehensweise ist, dass die zu einer Veränderung der Kipprichtung erforderlichen Zeiten wegen der Notwendigkeit des Verstellens der Verschlussmittel vergleichsweise lang sind.

Ausgehend von diesem Stand der Technik liegt der Erfindung die Aufgabe zugrunde, einen Kraftfahrzeug-Prüfstand mit einer Kippvorrichtung anzugeben, bei welchem die für eine Veränderung der Kipprichtung benötigte Zeit verringert ist, so dass die Anzahl der pro Zeiteinheit prüfbaren Fahrzeuge erhöht ist.

Diese Aufgabe wird durch einen Kraftfahrzeug-Prüfstand mit den im Anspruch 1 angegebenen Merkmalen gelöst.

Vorteilhafte Ausgestaltungen und Weiterbildungen der Erfindung ergeben sich aus den abhängigen Ansprüchen.

Die Vorteile der Erfindung bestehen insbesondere in einer Verkürzung der Taktzeiten, da die Umrüstzeiten wesentlich niedriger sind als beim bekannten Stand der Technik. Darüber hinaus ist bei einer Verwendung eines Kraftfahrzeug-Prüfstandes gemäß der Erfindung die Prozess-Sicherheit erhöht und der Wartungsaufwand im Vergleich zu bekannten Kraftfahrzeugprüfständen verringert.

Weitere vorteilhafte Eigenschaften der Erfindung ergeben sich aus der nachfolgenden Beschreibung anhand eines Ausführungsbeispiels.

Es zeigt:
- FIG 1: eine schematische Draufsicht eines Kraftfahrzeug-Prüfstandes mit einem darauf angeordneten, zu prüfenden Kraftfahrzeug;
- **FIG 2**: eine Skizze eines Teils eines Kraftfahrzeug-Prüfstands gemäß der Erfindung, aus der die wesentlichen Merkmale des beanspruchten Kraftfahrzeug-Prüfstandes ersichtlich sind, und
- FIG 3: die Einzelheit B des in Figur 2 gezeigten Kraftfahrzeug-Prüfstandes in vergrößerter Darstellung.

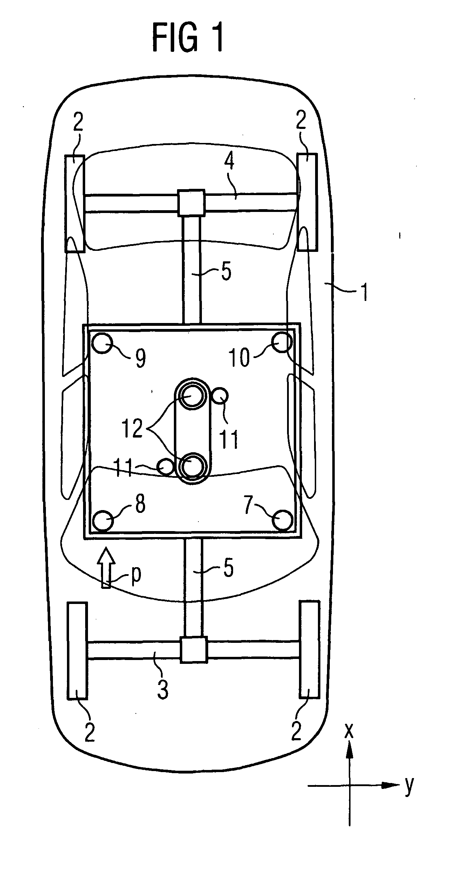

Die Figur 1 zeigt eine schematische Draufsicht eines Kraftfahrzeug-Prüfstandes mit einem darauf angeordneten zu prüfenden Kraftfahrzeug 1.

Der gezeigte Kraftfahrzeug-Prüfstand weist eine obere Rahmeneinheit 6 auf, an welcher in Fahrzeuglängsrichtung verlaufende Tragarme 5 befestigt sind. Diese sind in ihren Endbereichen mit in Fahrzeugquerrichtung verlaufenden Tragarmen 3,4 verbunden. An den Außenseiten der Tragarme 3,4 sind Radaufnahmeelemente 2 vorgesehen.

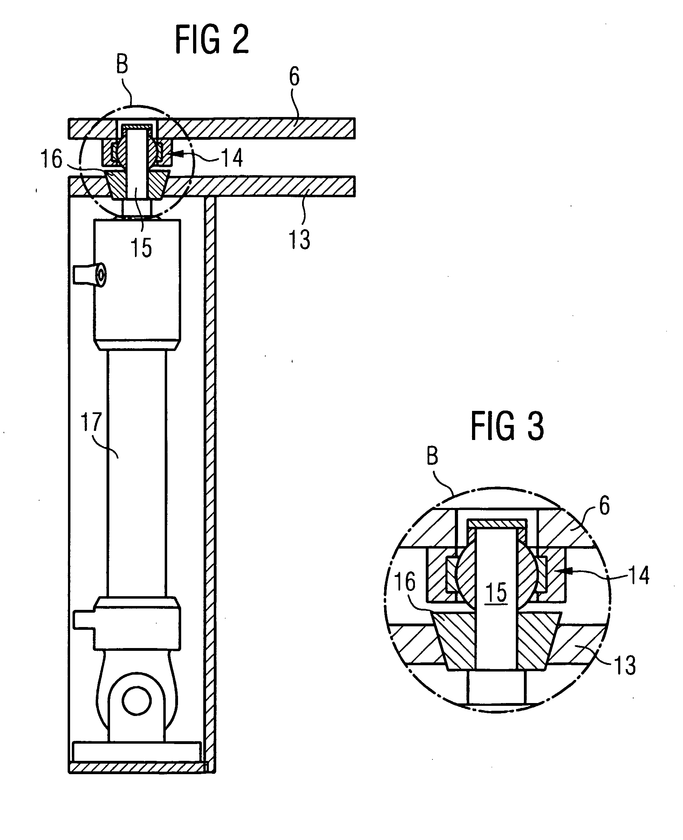

Die obere Rahmeneinheit 6 ist eben in Form einer Metallplatte ausgebildet und hat eine quadratische oder rechteckförmige Grundfläche. Im Bereich der Ecken der oberen Rahmeneinheit 6 ist die Kippvorrichtung, wie noch unten anhand der Figuren 2 und 3 näher erläutert wird, jeweils mit einer Hubeinheit ausgestattet.

Weiterhin ist ein Kraftfahrzeug-Prüfstand gemäß der Erfindung, bei dem es sich vorzugsweise um einen ESP-Prüfstand handelt (Elektronisches-Stabilitäts-Programm), mit Führungen 12 und einer Aushubeinheit 11 versehen, die zu einem Anheben des Fahrzeugs in die Prüfposition dienen.

Mittels der Kippvorrichtung kann im Rahmen des ESP-Prüfvorganges ein Verkippen des Fahrzeugs sowohl in Längs- als auch in Querrichtung erfolgen.

Die Figur 2 zeigt eine Skizze eines Teils eines Kraftfahrzeug-Prüfstandes gemäß der Erfindung, aus der die wesentlichen Merkmale der Erfindung hervorgehen. Bei dem dargestellten Teil handelt es sich um eine Seitenansicht der vorderen rechte Ecke des Prüfstandes in Richtung des Pfeiles p in Figur 1.

Aus der Figur 2 geht hervor, dass unterhalb der oberen Rahmeneinheit 6 eine untere Rahmeneinheit 13 vorgesehen ist. Auch die untere Rahmeneinheit 13 hat eine quadratische oder rechteckförmige Grundfläche. Die beiden Rahmeneinheiten sind etwa deckungsgleich übereinander angeordnet. Folglich ist auch im Bereich der vier Ecken der unteren Rahmeneinheit 13 jeweils eine der Hubeinheiten vorgesehen. Die beiden Rahmeneinheiten 6 und 13 sind ausschließlich über diese vier Hubeinheiten miteinander verbunden.

Die in der Figur 2 dargestellte Hubeinheit 17 ist an ihrer Oberseite mit einer Kolbenstange 15 versehen. Diese ist durch ein sich nach oben verbreiterndes konusförmiges Loch der unteren Rahmeneinheit 13 geführt und mit der oberen Rahmeneinheit 6 über ein sphärisches Lager 14 verbunden.

Im nicht ausgefahrenen Zustand der Kolbenstange 15, welcher in der Figur 2 gezeigt ist, ist eine konusförmige Umrahmung 16 der Kolbenstange 15 derart in das konusförmige Loch der unteren Rahmeneinheit 13 eingesetzt, dass dieses Loch verschlossen ist. Die konusförmige Umrahmung 16 der Kolbenstange ist vorzugsweise mit der Kolbenstange fest verbunden, beispielsweise auf diese aufgeschweißt. Dadurch wird in der Ebene der unteren Rahmeneinheit in x-/y-Richtung ein Formschluss zwischen der Kolbenstange und der unteren Rahmeneinheit sichergestellt und ein Festlager zwischen unterer und oberer Rahmeneinheit gebildet.

Wird die Kolbenstange 15 durch die Hubeinheit 17 ausgefahren, dann drückt die Kolbenstange 15 die obere Rahmeneinheit 6 im Bereich der rechten vorderen Ecke 8 der Kippvorrichtung nach oben. Da bei diesem Ausfahren der Kolbenstange 15 auch die konusförmige Umrahmung 16 nach oben bewegt wird, entsteht im konusförmigen Loch der unteren Rahmeneinheit 13 ein seitlicher Freiraum, durch welchen für die Kolbenstange beim Ausfahren eine geringfügige seitliche Auslenkung zugelassen wird.

Wird gleichzeitig mit der in der rechten vorderen Ecke 8 der Kippvorrichtung angeordneten Kolbenstange 15 auch die in der rechten hinteren Ecke 9 der Kippvorrichtung angeordnete Kolbenstange durch die dortige Hubeinheit ausgefahren und verbleiben die in den Ecken 7 und 10 befindlichen Kolbenstangen im eingefahrenen Zustand, dann erfolgt ein Verkippen des Fahrzeugs um seine Längsachse.

Wird hingegen gleichzeitig mit der in der rechten vorderen Ecke 8 der Kippvorrichtung angeordnete Kolbenstange 15 auch die in der linken vorderen Ecke 7 der Kippvorrichtung angeordnete Kolbenstange durch die dortige Hubeinheit ausgefahren und verbleiben die in den hinteren Ecken 9 und 10 befindlichen Kolbenstangen im eingefahrenen Zustand, dann erfolgt ein Verkippen des Fahrzeugs um seine Querachse.

Die in den Ecken angeordneten Hubeinheiten sind vorzugsweise sowohl in Druck- als auch in Zugrichtung betreibbar, um in allen Betriebszuständen eine gesicherte Position zu gewährleisten.

Die Figur 3 zeigt die Einzelheit B des in der Figur 2 gezeigten Kraftfahrzeug-Prüfstandes in vergrößerter Darstellung. In dieser vergrößerten Darstellung sind insbesondere die Verbindung der Kolbenstange 15 über ein sphärisches Lager 14 mit der oberen Rahmeneinheit 6 und das Verschließen des konusförmigen Loches in der unteren Rahmeneinheit 13 durch die konusförmige Umrahmung 16 der Kolbenstange 15 gezeigt.

Die Steuerung des Ausfahrens der den Hubeinheiten zugeordneten Kolbenstangen erfolgt durch eine entsprechende Ansteuerung der Hubeinheiten durch eine zentrale Steuereinheit. Diese steht mit einer Bedieneinheit des Kraftfahrzeug-Prüfstandes in Verbindung und arbeitet nach der Eingabe eines Startbefehles ein vorgegebenes Prüfungsprogramm ab, in dessen Verlauf das Fahrzeug zu einer ESP-Prüfung wiederholt um seine Längs- als auch um seine Querachse verkippt wird und die Reaktion des Fahrzeugs auf dieses Verkippen ausgewertet wird.

Jeder dieser Kippvorgänge zeichnet sich dadurch aus, dass zwei benachbarte Kolbenstangen durch die jeweils zugehörige Hubeinheit ausgefahren werden, während die anderen beiden im eingefahrenen Zustand verbleiben.

Die genannten vier Hubeinheiten, die zum Ausfahren der jeweiligen Kolbenstange und damit zur Durchführung der Kippvorgänge dienen, sind ausschließlich zur Durchführung dieser Kippvorgänge vorgesehen. Der Aushub des auf der Kippvorrichtung befindlichen Fahrzeugs wird durch die gesonderte Hubeinheit 11 vorgenommen, die im Bereich der Führungen 12 angeordnet ist.

## Patentansprüche

1. Kraftfahrzeug-Prüfstand mit einer Kippvorrichtung, welche eine untere Rahmeneinheit (13) und eine relativ zu dieser kippbare obere Rahmeneinheit (6) aufweist, wobei die Kippvorrichtung weiterhin vier im Bereich der Ecken (7, 8, 9, 10) der Rahmeneinheiten angeordnete Hubeinheiten (17) aufweist **dadurch gekennzeichnet, dass** die untere Rahmeneinheit (13) im Bereich ihrer vier Ecken jeweils ein sich nach oben verbreiterndes konusförmiges Loch aufweist, durch welches eine zu einer jeweils zugehörigen Hubeinheit (17) gehörige Kolbenstange (15) geführt ist.

2. Kraftfahrzeug-Prüfstand nach Anspruch 1,
**dadurch gekennzeichnet, dass** die untere und die obere Rahmeneinheit ausschließlich über die Hubeinheiten miteinander verbunden sind.

3. Kraftfahrzeug-Prüfstand nach Anspruch 1 oder 2,
**dadurch gekennzeichnet, dass** die Kolbenstange (15) an ihrem Außenumfang mit einer sich nach oben verbreiternden konusförmigen Umrahmung (16) versehen ist, die im eingefahrenen Zustand in x-/y-Richtung eine zentrierte formschlüssige Verbindung zwischen der Kolbenstange und der unteren Rahmeneinheit (13) bildet, wodurch ein Festlager zwischen unterer und oberer Rahmeneinheit entsteht.

4. Kraftfahrzeug-Prüfstand nach einem der vorhergehenden Ansprüche, **dadurch gekennzeichnet, dass** die Kolbenstange (15) in ihrem oberen Endbereich über ein sphärisches Lager (14) mit der oberen Rahmeneinheit (6) verbunden ist.

5. Kraftfahrzeug-Prüfstand nach einem der vorhergehenden Ansprüche, **dadurch gekennzeichnet, dass** bei einem Verkippen der oberen Rahmeneinheit (6) zwei benachbarte Kolbenstangen im eingefahrenen Zustand verbleiben und die beiden anderen ausgefahren werden.

6. Kraftfahrzeug-Prüfstand nach einem der vorangehenden Ansprüche, **dadurch gekennzeichnet, dass** eine Kolbenstange beim Ausfahren einer geringfügigen seitlichen Auslenkung unterworfen ist.

7. Kraftfahrzeug-Prüfstand nach einem der vorhergehenden Ansprüche, **dadurch gekennzeichnet, dass** die vier Hubeinheiten (17) ausschließlich zum Verkippen der oberen Rahmeneinheit (6) vorgesehen sind.

8. Kraftfahrzeug-Prüfstand nach einem der vorhergehenden Ansprüche, **dadurch gekennzeichnet, dass** er eine mit einer Bedieneinheit verbundene zentrale Steuereinheit aufweist, die zur Ansteuerung der Hubeinheiten dient.

## Claims

1. Test stand for motor vehicles, having a tipping device, comprising a lower frame unit (13) and an upper frame unit (6) configured to tip relative to said lower frame unit (13), with the tipping device further comprising four lifting units (17) disposed in corner zones (7,8,9,10) of the frame units,
**characterised in that**
the lower frame unit (13) comprises a conical hole which widens upwards in each instance in its four corner zones, through which hole a piston rod (15) relevant to a respectively associated lifting unit (17) is guided.

2. Test stand for motor vehicles according to claim 1,
**characterised in that**
the lower and the upper frame units are connected to one another exclusively by way of the lifting units.

3. Test stand for motor vehicles according to claim 1 or 2,
**characterised in that**
the piston rod (15) is provided with a conical frame (16) widening upwards along its outer circumference, said frame (16), in a retracted position in the x-/y-direction forming a centred positive connection between the piston rod and the lower frame unit (13), thereby forming a solid bearing between the lower frame unit and the upper frame unit.

4. Test stand for motor vehicles according to one of the preceding claims,
**characterised in that**
the piston rod (15) is connected, in its upper end region, with the upper frame (6) unit via a spherical bearing (14).

5. Test stand for motor vehicles according to one of the preceding claims,
**characterised in that**
if the upper frame unit (6) is tipped, two adjacent piston rods remain in the retracted position and the two other piston rods are extended from retracted positions.

6. Test stand for motor vehicles according to one of the preceding claims,
**characterised in that**
a piston rod is subject to a minimal lateral deflection when the piston rod is extended from the retracted position.

7. Test stand for motor vehicles according to one of the preceding claims,
**characterised in that**
the four lifting units (17) are provided exclusively for tipping the upper frame unit (6).

8. Test stand for motor vehicles according to one of the preceding claims,
**characterised in that**
it comprises a central control unit connected to a control terminal, said control unit being used to control the lifting units.

## Revendications

1. Banc d'essai pour véhicules automobiles équipé d'un dispositif d'inclinaison qui comporte une unité inférieure de cadre (13) et une unité supérieure de cadre (6) qui peut s'incliner par rapport à celle-ci, le dispositif d'inclinaison étant en outre équipé de quatre unités de levage (17) placées dans la zone des coins (7, 8, 9, 10) des unités de cadre,
**caractérisé en ce que** dans la zone de ses quatre coins l'unité de cadre inférieure (13) comporte respectivement un trou conique qui s'élargit vers le haut et dans lequel est guidée une tige de piston (15) qui fait partie d'une unité de levage (17) respectivement correspondante.

2. Banc d'essai pour véhicules automobiles selon la revendication 1, **caractérisé en ce que** les unités de cadre inférieure et supérieure sont reliées l'une à l'autre exclusivement par les unités de levage.

3. Banc d'essai pour véhicules automobiles selon la revendication 1 ou 2, **caractérisé en ce que** sur son pourtour extérieur la tige de piston (15) est munie d'un encadrement (16) conique qui s'élargit vers le haut et qui à l'état rentré forme entre la tige de piston et l'unité de cadre inférieure (13) une liaison centrée par combinaison de formes en direction x / y, grâce à quoi on obtient un palier fixe entre les unités de cadre inférieure et supérieure.

4. Banc d'essai pour véhicules automobiles selon l'une des revendications précédentes, **caractérisé en ce que**, à son extrémité supérieure, la tige de piston (15) est reliée à l'unité de cadre supérieure (6) par l'intermédiaire d'un palier (14) sphérique.

5. Banc d'essai pour véhicules automobiles selon l'une des revendications précédentes, **caractérisé en ce que**, quand l'unité de cadre supérieure (6) s'incline, deux tiges de piston voisines restent en état rentré et les deux autres se déploient.

6. Banc d'essai pour véhicules automobiles selon l'une des revendications précédentes, **caractérisé en ce qu'**une tige de piston est soumise à une légère déviation latérale lors du déploiement.

7. Banc d'essai pour véhicules automobiles selon l'une des revendications précédentes, **caractérisé en ce que** les quatre unités de levage (17) sont exclusivement prévues pour incliner l'unité de cadre supérieure (6).

8. Banc d'essai pour véhicules automobiles selon l'une des revendications précédentes, **caractérisé en ce qu'**il comporte une unité centrale de pilotage reliée à une unité de commande et destinée à commander les unités de levage.
